# EUROPÄISCHE PATENTSCHRIFT

(11) **EP 0 434 912 B1**
(45) Veröffentlichungstag und Bekanntmachung des Hinweises auf die Patenterteilung: **23.02.1994**
(21) Anmeldenummer: 90118830.0
(22) Anmeldetag: 02.10.1990
(51) Int. Cl.: F16K 1/12, F16K 31/04

(54) **Sitzventil**
Lift valve
Clapet

(30) Priorität: 04.10.1989 DE 3933169
(43) Veröffentlichungstag der Anmeldung: 03.07.1991
(73) Patentinhaber: TEST - FUCHS Ing. Fritz Fuchs Ges.m.b.H., A-3812 Gross-Siegharts (AT)
(72) Erfinder: Fuchs, Franz, D-8012 Ottobrunn (DE)

(56) Entgegenhaltungen:
- DE-B- 2 744 917
- DE-U- 8 814 477
- US-A- 4 452 423
- PATENT ABSTRACTS OF JAPAN, Band 133, Nr. 48 (M-793)[3396], 3. Februar 1989;& JP-A-63 254 282 (HITACHI) 20-10-1988

## Beschreibung

Die Erfindung betrifft ein Sitzventil für tiefgekühlte Fluide, insbesondere für kryogen verflüssigte Raketentreibstoffe, gemäß dem Oberbegriff des Patentanspruches 1.

Ein solches Ventil ist z.B. aus der EP-A-257 906 bekannt.

Regelorgane, wie z.B. Ventile, welche bei extrem tiefen Temperaturen eingesetzt werden, unterliegen besonders schwierigen Betriebsbedingungen, deren Auswirkungen bereits bei der Konstruktion zu berücksichtigen sind. So ist zu bedenken, daß bei Temperaturen von beispielsweise 20 bis 80 K (übliche Temperaturen für Raketentreibstoffe) gängige Schmiermittel, wie Mineralöle und -fette, nicht mehr verwendbar sind. Vergleichbares gilt für Hydraulikflüssigkeiten, so daß beispielsweise der Einsatz hydraulischer Antriebe - wenn überhaupt - nur sehr bedingt möglich ist.

Bei Ventilen Für flüssige Raketentreibstoffe, z.B. LH₂, zur Versorgung größerer Triebwerke kommen weitere Anforderungen wie große Massenströme, hohe Drücke und kurze Schaltzeiten (Öffnen, Schließen) hinzu.

Aus der DE-C- 27 44 917 ist ein Sitzventil mit geradem Durchgang bekannt, welches allgemein als Kryoventil, vorzugsweise jedoch als Treibstoffventil in der Raumfahrt einsetzbar ist. Dieses Sitzventil weist einen strömungsgünstigen, zentrisch in der Ventilkammer angeordneten Ventilkörper auf, welcher - bei geöffnetem Ventil - mit der Innenkontur der Ventilkammer über seine Länge etwa gleichbleibend große Strömungsquerschnitte bildet. Der axial verschiebbare Ventilkörper wird von einer pneumatischen Kolben/Zylinder-Anordnung angetrieben, welche beim Öffnen des Ventiles gegen Federkraft und gegen den Treibstoffdruck arbeitet. Dabei wird dem Ventil von außen ein Druckmittel (Helium) zugeführt. Zum Schließen wird das Druckmittel abgelasseng die Schließbewegung erfolgt durch Federkraft sowie durch den Treibstoffdruck. Vorteile dieser Ventilausführung sind die relativ einfache, kompakte Bauweise mit wenig Teilen und Dichtstellen sowie der günstige Strömungsverlauf, verbunden mit minimalen Druckverlusten. Gewisse Nachteile bringt jedoch der pneumatische Antrieb mit sich. Als Druckmittel (Steuerfluid) wird Helium verwendet, welches primär als Sperrgas zwischen der heißen und der kalten Strömung (Turbinentreibgas/Treibstoff) in den Turbopumpen verwendet und dabei - infolge von Leckageverlusten - verbraucht wird. So kann es vorkommen, daß gegen Missionsende kein Helium mehr zur Ventilbetätigung zur Verfügung steht. Nachteilig ist weiterhin der konstruktive, gewichts- und kostenmäßige Aufwand für das Helium-Leitungs- und -Regelsystem, mit dem jedes Treibstoffventil verbunden sein muß. Solche Systeme sind auch problematisch hinsichtlich ihrer Zuverlässigkeit. Da als Druckmedium ein kompressibles Gas verwendet wird, ist der Schaltvorgang des Ventiles zeitlich und kinematisch nur sehr grob zu beeinflussen. Es gibt nur eine Auf- und eine Zu-Stellung jeweils gegen Anschlag, definierte Zwischenstellungen sind praktisch nicht möglich.

Aus der EP-A- 0 257 906 sind unterschiedliche Ausführungen von Sitzventilen bekannt, bei welchen der axial bewegbare Sitzkörper von einem Elektromotor über eine Spindel/Mutter-Anordnung angetrieben wird. Der Schwerpunkt liegt hier auf einer möglichst platzsparenden Bauweise des Ventilgehäuses, was dadurch erreicht wird, daß der Rotor des Elektromotors weitgehend den Strömungskanalquerschnitt ausnützt und selbst vom Fördermedium durchströmt wird. Auf diese Weise entspricht der Außendurchmesser des Ventilgehäuses etwa dem Außendurchmesser der angrenzenden Rohrleitungen. Eine solche Anordnung hat jedoch erhebliche Nachteile. Die unmittelbar in der Strömung liegenden Einbauten (Lager, Rotor, Getriebe) stören den Strömungsverlauf stark, so daß mit großen Druckverlusten zu rechnen ist. Je nach physikalischer Beschaffenheit des strömenden Mediums wirken auf den sich drehenden Rotor große Reibungsmomente, so daß die Antriebsleistung unnötig erhöht wird. Aggressive strömende Medien können Lager, Rotor und Getriebe chemisch/physikalisch angreifen und somit deren Lebensdauer erheblich verkürzen. Demzufolge eignet sich eine solche Ventilbauweise nur für nicht-aggressive Medien mit niedriger Viskosität bei relativ kleinem Durchsatz.

Aus der EP-A- 0 191 366 ist ein Antriebs- und Positioniersystem bekannt, welches aus einem speziellen Elektromotor mit elektronischer Spannungsversorgung besteht. Der Motor weist einen mit Permanentmagneten bestückten Rotor und einen Stator mit mindestens zwei Teilwicklungen auf, welche mit der von Rotorpositions-Sensoren zur Stromkommuntierung gesteuerten, elektronischen Spannungsversorgungsschaltung verbunden sind. Dabei ist der Stator eisenfrei ausgebildet, die in parallelen Ebenen liegenden, scheibenförmigen Teilwicklungen des Stators sind überlappend derart angeordnet, daß die freien Innenräume der Teilspulen jeweils durch Stegteile von anderen Teilspulen vollständig ausgefüllt sind, wobei das von den Teilspulen erzeugte und umfaßte magnetische Feld im wesentlichen parallel zu dem von den Permanentmagneten erzeugten, magnetischen Feld liegt. Die Rotorpositions-Sensoren sind in die Teilwicklungen integriert. Ein solcher eisenfreier Aufbau ergibt - in Verbindung mit der elektronischen Spannungsversorgungs- und Steuerschaltung - eine exakte Rotorpositionierung in beliebigen Sollwert-Drehwinkeln, wobei sich der Rotor während der Drehbewegung und in Ruheposition in der jeweiligen Soll-Stellung magnetisch eingerastet verhält. Ein in dieser Weise aufgebauter und gesteuerter Elektromotor ermöglicht hohe Drehzahlen, d.h. kurze Stellzeiten, bei geringen Verlusten. Ein Motor bzw. Antrieb dieser Art ist insbesondere für den Tieftemperatureinsatz sehr gut geeignet. Der genannte, konstruktive Aufbau - in Verbindung mit gezielter Werkstoffauswahl - ermöglicht es beispielsweise, das maximale Dauerdrehmment bei einer Temperatur von 80 K gegenüber Normalbedingungen auf den 6-fachen Wert zu erhöhen. Abgesehen von dem allgemeinen Hinweis auf Tieftemperatureinsatz, sind keine weiteren Anwendungsgebiete genannt.

Die Aufgabe der vorliegenden Erfindung besteht angesichts des genannten Standes der Technik darin, ein Sitzventil für tiefgekühlte Fluide, insbesondere für kryogen verflüssigte Raketentreibstoffe, zu schaffen, welches besonders strömungsgünstig, relativ einfach und kompakt aufgebaut, preiswert, zuverlässig und leichtgewichtig ist und wenig Antriebsleistung benötigt.

Diese Aufgabe wird durch die im Anspruch 1 gekennzeichnete Merkmalskombination gelöst.

Der strömungsmechanische Aufbau wird von dem Sitzventil nach der DE-PS 27 44 917 übernommen, d.h., es ist ein zentraler, axial beweglicher, strömungsgünstiger Ventilkörper vorhanden, welcher - im geöffneten Zustand - mit der Innenkontur der Ventilkammer über seine Länge etwa gleichbleibend große Strömungsquerschnitte bildet.

Der pneumatische Antrieb nach der DE-PS 27 44 917 wird - in Anlehnung an die EP-OS 0 257 906 - durch einen elektromechanischen Antrieb mit E-Motor und Getriebe ersetzt, welcher im Inneren des Ventilkörpers angeordnet ist.

Der Elektromotor ist als Kryomotor ausgeführt, wobei Aufbau und Steuerung dem Antriebs- und Positioniersystem nach der EP-OS 0 191 366 entsprechen.

Durch diese Merkmalskombination ergibt sich ein Sitzventil mit besonders vorteilhaften Eigenschaften:
- Besonders günstiger Strömungsverlauf und damit ein geringer Druckverlust,
- hoher Antriebswirkungsgrad und damit eine niedrige Leistungsaufnahme, besonders bei Kryotemperaturen,
- relativ einfacher, kompakter Aufbau ohne gleitende Dichtelemente und ohne Fluidleitungen im Antriebs- bzw. Steuersystem,
- hohe Zuverlässigkeit,
- relativ preisgünstige Konstruktion,
- extrem genaue Steuerbarkeit mit, falls erforderlich, definierten Zwischenstellungen über die Auf- und Zu-Position hinaus,
- im Bedarfsfall hohe Schaltgeschwindigkelt,
- relativ niedriges Gewicht.

Bezüglich des mechanischen Getriebes ist zu sagen, daß eine Gewindespindel/Mutter-Anordnung sich natürlich besonders anbietet, um die Drehbewegung des Rotors in die Axialbewegung des Ventilkörpers umzusetzen. Es sind aber auch andere Lösungen denkbar, beispielsweise mit Zahnrädern und Zahnstangen, mit Hebelgetrieben, Ketten, Seilen usw..

Die Elektronik zur Spannungs- und Stromversorgung bzw. Steuerung des Elektromotors wird man - u.a. aus Platzgründen - an geeigneter Stelle außerhalb des Ventilgehäuses anordnen.

Die Unteransprüche 2 und 3 enthalten bevorzugte Ausgestaltungen des Sitzventiles nach Anspruch 1.

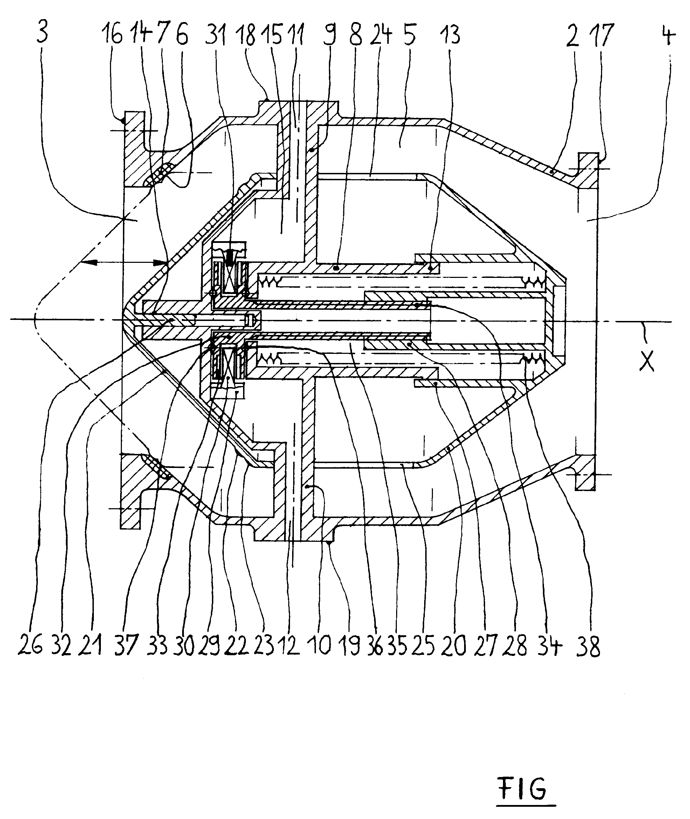

Die Erfindung wird nachfolgend anhand der Figur noch näher erläutert. Diese zeigt in vereinfachter Darstellung einen Längsmittelschnitt durch ein Sitzventil für kryogen verflüssigte Raketentreibstoffe.

Das Sitzventil 1 dient beispielsweise zur Freigabe und zur Sperrung des LH₂-Stromes zu einem Raketentriebwerk. Die äußere Hülle des Sitzventiles 1 bildet das Ventilgehäuse 2 mit koaxialem Einlaß 3 und Auslaß 4, welche über die Ventilkammer 5 strömungstechnisch verbunden sind. Die den Strömungskanal begrenzenden Wandkonturen sind bezüglich der Ventilachse X zumindest annähernd rotationssymmetrisch geformt, d.h. die Strömungsquerschnitte sind vorzugsweises kreis- oder kreisringförmig. Zur Regelung des Durchsatzes dient der axial bewegbare Ventilkörper 20, dessen Vorderseite der Sitzkörper 21 mit zwei umlaufenden Erhebungen 22 und 23 bildet. Die Erhebungen 22 und 23 drücken im geschlossenen Zustand des Sitzventils 1 (strichpunktiert angedeutet) auf die Sitzfläche 6, welche die Oberfläche eines mit dem Ventilgehäuse 2 verbundenen, elastischen Dichtringes 7 ist. Der axiale Verschiebeweg des Ventilkörpers 20 ist mit einem Doppelpfeil wiedergegeben.

Die Abstützung des Ventilkörpers 20 in der Ventilkammer 5 erfolgt über die Stützstruktur 8, welche im Bereich des Strömungskanales aus einer oder mehreren, fest mit dem Ventilgehäuse 2 verbundenen, strömungsgünstig geformten Stützrippen 9, 10 besteht. Die radiale Zentrierung des Ventilkörpers 20 wird von zwei Gleitpaarungen übernommen. Am stromaufwärtigen Ende des Ventilkörpers 20 ist ein mit dem Sitzkörper 21 verbundener Zentrierstift 26 in einer Zentrierbohrung 14 der Stützstruktur 8 axial beweglich geführt, in der Nähe des stromabwärtigen Endes umgreift eine Zentrierhülse 27 des Ventilkörpers 20 einen Zentrierkragen 13 der Stützstruktur 8. Die Stützrippen 9 und 10 greifen durch Langlöcher 24 und 25 im Mantel des Ventilkörpers 20, deren Breite nur geringfügig größer ist als die Breite der Stützrippen 9 und 10. Auf diese Weise wird ein Drehen des Ventilkörpers 20 um die Ventilachse X verhindert, was für dessen Antrieb von Bedeutung ist. Die Antriebsleistung wird von einem Elektromotor 29 erzeugt, welcher als Kryomotor ausgeführt ist. Bauartbedingt weist dieser bei Kryotemperaturen einen besonders hohen Wirkungsgrad auf. Der Elektromotor 29 sitzt in einem Motorraum 15, welcher volumetrisch vom Strömungskanal des Treibstoffes getrennt ist. Durch Wärmeleitung wird der thermisch nicht isolierte Elektromotor 29 jedoch etwa die Temperatur des Treibstoffes annehmen. Der Elektromotor 29 ist vom Prinzip her ein bürstenloser Gleichstrommotor mit elektronischer Stromkommutierung. Sein ferromagnetischer Rotor 32 ist mit Permanentmagneten 33 aus Neodymium-Eisen-Legierung bestückt. Sein Stator 30 ist eisenfrei ausgeführt und weist mindestens zwei Teilwicklungen auf, welche überlappend angeordnet und zur Stromkommutierung mit einer elektronischen Spannungsversorgungsschaltung verbunden sind. Die Rotorstellung wird von Rotorpositions-Sensoren 31 erfaßt, welche in die Teilwicklungen integriert und vorzugsweise als Hall-Sensoren ausgeführt sind. Die Stromversorgung des Stators 30 kann beispielsweise über Leitungen durch die Bohrung 11 erfolgen. Für optimale Betriebsbedingungen wird der Motorraum 15 vor der Mission mit einem inerten Gas (Helium) gefüllt, z.B. über die Bohrung 12 in der Stützrippe 10, welches bei den zu erwartenden Temperaturen (20 ./. 80 K) noch trocken und gasförmig ist.

Da auf den Rotor 32 im Betrieb primär axiale Kräfte einwirken, und die Reibungsverluste möglichst klein sein sollen, ist er mit zwei Axialwälzlagern 36 und 37 versehen.

Im Hinblick auf guten Wirkungsgrad ist das mechanische Getriebe als Kugelrollspindelgetriebe ausgeführt. Die Gewindespindel 34 ist fest mit dem Rotor 32, die Kugelumlaufmutter 28 fest mit dem Ventilkörper 20 verbunden. Der Getrieberaum 35 ist mit einem Faltenbalg 38 gegenüber dem Treibstoff abgedichtet.

Das Sitzventil 1 wird über die großen Flansche 16 und 17 mit angrenzenden Rohrleitungen bzw. Bauteilen verschraubt, die kleinen Flansche 18 und 19 dienen zur Installierung von elektrischen Steckern, Verschlüssen o.ä..

Es kann sinnvoll sein, das Ventilgehäuse 2 auf der Außenseite mit einer wärmeisolierenden Schicht zu versehen (nicht dargestellt), um unerwünschte Temperatur- bzw. Phasenänderungen des Treibstoffes zu vermeiden.

Abschließend sei noch auf Variationsmöglichkeiten hingewiesen, welche in der Figur nicht dargestellt sind.

Das Kugelrollspindelgetriebe kann alternativ so eingebaut sein, daß die Kugelumlaufmutter fest mit dem Rotor des Elektromotors, die Gewindespindel fest mit dem Ventilkörper verbunden ist. Dabei kann der Rotor des Elektromotors selbst als Mutter ausgeführt sein, welche die Gewindespindel umschließt. Es besteht auch die Möglichkeit, bei dem in der Figur dargestellten Sitzventil das Kugelrollspindelgetriebe mit Abdichtung (Faltenbalg) zwischen dem kegeligen, mit der Spitze nach links weisenden Sitzkörper und dem Elektromotor zu installieren. Dabei müßte der Elektromotor - aus Platzgründen - in den rechten, stromabwärtigen Teil des Ventilkörpers verlegt werden, bei entsprechender Umgestaltung der Stützstruktur. Bildlich ausgedrückt bräuchte man hierfür nur die gesamte Anordnung im Inneren des Ventilkörpers um 180° zu drehen.

In der Figur ist der Ventilsitz einlaßseitig dargestellt, d.h., das Ventil schließt gegen den Treibstoffdruck.

Wie man sich anhand der Figur leicht überlegen kann (Vertauschen von Ein- und Auslaß, strömungsgünstige Abrundung der rechten Ventilkörperspitze), ist es ohne Änderung des Antriebsprinzipes möglich, den Ventilsitz auf der Auslaßseite anzuordnen, so daß der Schließvorgang durch den Treibstoffdruck unterstützt wird. Wie bereits erwähnt, kann der Kryomotor natürlich auch mittels anderer Getriebeausführungen (z.B. Zahnräder/Zahnstange) mechanisch mit dem Ventilkörper gekoppelt sein.

Abweichend von der Figur kann auch der Ventilsitz hinsichtlich Geometrie und Werkstoffpaarung in vielfacher Weise variiert werden.

## Patentansprüche

1. Sitzventil (1) für tiefgekühlte Fluide, insbesondere für kryogen verflüssigte Raketentreibstoffe, welches ein Ventilgehäuse (2) mit koaxialem Ein- und Auslaß (3,4), mit einer den Ein- und den Auslaß verbindenden Ventilkammer (5) und mit mindestens einer Sitzfläche (6) in der Nähe des Ein- oder Auslasses, sowie einen zentrisch in der Ventilkammer angeordneten, axial verschiebbaren Sitzkörper (21) umfaßt, welcher von einem Elektromotor (29) über ein mechanisches Getriebe (28,34), vorzugsweise eine Gewindespindel/Mutter-Anordnung, bewegt wird, **gekennzeichnet** durch die Kombination folgender Merkmale:
I. der Sitzkörper (21) ist Teil eines hohlen, axial verschiebbaren, strömungsgünstigen Ventilkörpers (20), welcher über eine fest mit dem Ventilgehäuse (2) verbundene Stützstruktur (8) radial zentriert wird, und welcher im geöffneten Zustand des Sitzventiles (1) mit der Innenkontur der Ventilkammer (5) über seine Länge flächenmäßig zumindest annähernd gleichbleibende Strömungsquerschnitte begrenzt;
II. Stator (30) und Rotor (32) des Elektromotors (29) sowie das mechanische Getriebe (Kugelumlaufmutter 28, Gewindespindel 34) sind im Inneren des Ventilkörpers (20) angeordnet, wobei der Stator (30) des Elektromotors (29) fest mit der Stützstruktur (8) verbunden ist;
III. der Elektromotor (29) ist als Kryomotor mit einem permanentmagnetenbestückten (Permanentmagneten 33) Rotor (32), mit einem eisenfreien Stator (30), dessen mindestens zwei, in parallelen Ebenen liegende, scheibenförmige Teilwicklungen überlappend angeordnet und zur Stromkommutierung mit einer rotorpositionsgesteuerten, elektronischen Spannungsversorgungsschaltung verbunden sind, sowie mit in die Teilwicklungen integrierten Rotorpositions-Sensoren (31) ausgeführt.

2. Sitzventil nach Anspruch 1, **dadurch gekennzeichnet,** daß das mechanische Getriebe als Kugelrollspindelgetriebe ausgeführt ist, daß die Gewindespindel (34) drehfest mit dem Rotor (32) des Elektromotors (29), die Kugelumlaufmutter (28) fest mit dem Ventilkörper (20) verbunden ist, welcher durch die Stützstruktur (8) gegen Verdrehen um die Ventilachse (X) gesichert ist (Stützrippen 9, 10, Langlöcher 24, 25), und daß der Rotor (32) des Elektromotors (29) auf beiden Stirnseiten mit je einem Axialwälzlager (36, 37) zur Aufnahme der Spindelkräfte versehen ist.

3. Sitzventil nach Anspruch 1 oder 2, **dadurch gekennzeichnet,** daß der Elektromotor (29) und das mechanische Getriebe gegenüber dem durch die Ventilkammer strömenden Fluid abgedichtet sind (Stützstruktur 8, Faltenbalg 38), und daß der Motorraum (15) von der Außenseite des Ventilgehäuses (2) durch die Stützstruktur (Stützrippe 10, Bohrung 12) mit einem Fluid, z.B. mit Helium, befüllbar und wieder entleerbar ist.

## Claims

1. Seat valve (1) for refrigerated low temperature fluids, in particular cryogenically liquified rocket fuel, comprising a valve housing (2) with coaxial input and output (3, 4), with a valve chamber (5) linking the input to the output and with at least one seat (6) located near the input or the output, and an obturator element (21), which is displaced in axial 10 direction, located at the centre of the valve chamber and moved by an electric motor (29) by means of a mechanical transmission (28, 34), preferably a screw/nut system, characterized by the combination of the following features:
I. The obturator element (21) is part of a hollow valve body (20), can be displaced axially and favours flow. It is radially centered by means of a support structure (8) attached to the valve housing (2) and, when seat valve (1) is open, limits the flow sections of noticeably 20 constant surface over its length with the inner profile of the valve chamber (5).
II. The stator (30) and the rotor (32) of the electric motor (29) as well as the mechanical transmission (recirculating ball-screw nut 28, screw 34) are provided inside the valve body (20). The stator (30) of the electric motor (29) is attached to the support structure (8).
III. The electric motor (29) is designed as a motor with super-conductors comprising one rotor (32) with permanent magnets (33), one iron-free stator (30) with at least two partial disk-shaped windings located in parallel planes and fitted in overlapping manner and, for commutation purposes, these are connected to an electronical supply that is controlled by the rotor position, and rotor position transducers (31) integrated into the partial windings.

2. Seat valve according to patent entitlement 1, characterized by the fact that the mechanical transmission is designed as a ball-screw mechanism, that the screw (34) is attached to the rotor (32) of the electric motor (29), the recirculating ball-screw nut (28) is attached to the valve body (20), the rotation of which around the axis (X) of the valve is rendered 45 impossible by the support structure (8) (ribs 9, 10, oblong holes 24, 25), and that the rotor (32) of the electrical motor (29) on each of the two front sides is equipped with an axial anti-friction bearing (36, 37) to absorb the loading effected by the screw.

3. Seat valve according to patent entitlement 1 or 2, characterized by the fact that the electric motor (29) and the mechanical transmission are sealed (support structure 8, blower 38) against the fluid flowing through the valve chamber, and that 55 the casing (15) of the motor can be filled with a fluid, for instance helium, and drained via the support structure (rib 10, hole 12) from the outside of the valve housing (2).

## Revendications

1. Soupape (1) à siège pour fluides réfrigérés à basse température, notamment pour des combustibles de fusée liquéfiés par voie cryogénique, comprenant un carter de soupape (2) avec entrée et sortie coaxiales (3,4), avec une chambre de soupape (5) reliant l'entrée et la sortie et avec au moins un siège (6) se trouvant à proximité de l'entrée ou de la sortie, et un élément obturateur (21) pouvant se déplacer axialement, centré dans la chambre de soupape et mû par un moteur électrique (29) par l'intermédiaire d'une transmission mécanique (28, 34), de préférence un système vis/écrou, caractérisé par la combinaison des caractéristiques suivantes:
I. L'élément obturateur (21) fait partie d'un corps de soupape (20) creux, pouvant se déplacer axialement et favorisant l'écoulement, qui est centré radialement par une structure support (8) solidaire du carter de soupape (2) et qui, en position ouverte de la soupape à siège (1), délimite sur sa longueur, avec le contour intérieur de la chambre de soupape (5), des sections d'écoulement dont la surface est au moins sensiblement constante.
II. Le stator (30) et le rotor (32) du moteur électrique (29) ainsi que la transmission mécanique (écrou 28 à recirculation de billes, vis 34) sont disposés à l'intérieur du corps de soupape (20), le stator (30) du moteur électrique (29) étant solidaire de la structure support (8).
III. Le moteur électrique (29) est réalisé sous forme de moteur à supraconducteurs comprenant un rotor (32) à aimants permanents (33), un stator (30) exempt de fer dont les, au minimum, deux enroulements partiels en forme de disque, se trouvant dans des plans parallèles, sont disposés de manière chevauchante et reliés pour la commutation à un circuit d'alimentation électronique, commandé par la position du rotor, et des capteurs (31) de position du rotor intégrés dans les enroulements partiels.

2. Soupape à siège selon la revendication 1, caractérisée par le fait que la transmission mécanique est réalisée sous forme de mécanisme à vis à billes, que la vis (34) est solidaire en rotation du rotor (32) du moteur électrique (29), I'écrou (28) à recirculation de billes est solidaire du corps de soupape (20) qui est immobilisé en rotation autour de l'axe (x) de la soupape par la structure support (8) (nervures 9, 10, trous oblongs 24, 25), et que le rotor (32) du moteur électrique (29) est muni sur ses deux faces frontales chaque fois d'un palier à roulement axial (36, 37) pour l'absorption des efforts de la vis.

3. Soupape à siège selon la revendication 1 ou 2, caractérisée par le fait que le moteur électrique (29) et la transmission mécanique sont montés étanches (structure support 8, soufflet 38) vis-à-vis du fluide traversant la chambre de soupape, et que l'enceinte (15) du moteur peut être remplie avec un fluide, par exemple de l'hélium, et vidée à partir de l'extérieur du carter de soupape (2), à travers la structure support (nervure 10, trou 12).
